Europäisches Patentamt

(19) European Patent Office

Office européen des brevets

(11) **EP 0 923 250 A1**

(12) **EUROPEAN PATENT APPLICATION**

(43) Date of publication:
**16.06.1999 Bulletin 1999/24**

(51) Int. Cl.$^6$: **H04N 7/26**

(21) Application number: **97121268.3**

(22) Date of filing: **03.12.1997**

(84) Designated Contracting States:
**AT BE CH DE DK ES FI FR GB GR IE IT LI LU MC
NL PT SE**
Designated Extension States:
**AL LT LV MK RO SI**

(71) Applicant:
**DAEWOO ELECTRONICS CO., LTD
Seoul (KR)**

(72) Inventor:
**Kim, Jin-Hun,
c/o Video Research Center
Jung-Gu, Seoul (KR)**

(74) Representative:
**Turi, Michael, Dipl.-Phys. et al
Samson & Partner
Widenmayerstrasse 5
80538 München (DE)**

(54) **Method and apparatus for adaptively encoding a binary shape signal**

(57)     An apparatus selectively encodes a binary shape signal by using a progressive shape coding technique or an interlaced shape coding technique depending on the spatial correlation between binary pixel values constituting the binary shape signal. The apparatus calculates a progressive correlation value based on binary pixel values within each pixel lines of the binary shape signal, and computes an interlaced correlation value by using binary pixel values within pixel lines of a top field and those of a bottom field, the top and the bottom fields being obtained from the binary shape signal. Then, the progressive correlation value is compared with the interlaced correlation value. The binary shape signal is encoded on a block-by-block basis by the progressive shape coding technique or encoded on a field-by-field basis by the interlaced shape coding technique in response to the comparison result.

*FIG.2*

## Description

The present invention relates to a method and apparatus for coding a binary shape signal; and, more particularly, to a method and apparatus for selectively coding the binary shape signal by using a progressive shape coding or an interlaced shape coding technique depending on the spatial correlationships among the binary pixel values constituting the binary shape signal.

In digital video systems such as video-telephone and teleconference systems, a large amount of digital data is needed to define a video frame signal since the video frame signal comprises a sequence of digital data referred to as pixel values.

Since, however, the available frequency bandwidth of a conventional transmission channel is limited, in order to transmit the substantial amount of digital data therethrough, it is necessary to compress or reduce the volume of the data through the use of various data compression techniques, especially, in the case of such low bit-rate video signal encoders as video-telephone and teleconference systems.

One of such techniques for encoding video signals for a low bit-rate encoding system is an object-oriented analysis-synthesis coding technique, wherein an input video image is divided into objects; and three sets of parameters for defining the motion, contour and pixel data of each object are processed through different encoding channels.

One example of such object-oriented coding scheme is the so-called MPEG (Moving Picture Experts Group) phase 4 (MPEG-4), which is designed to provide an audio-visual coding standard for allowing a content-based interactivity, improved coding efficiency and/or universal accessibility in such applications as low-bit rate communication, interactive multimedia (e.g., games, interactive TV, etc.) and area surveillance.

According to MPEG-4, an input video image is divided into a plurality of video object planes (VOP's), which correspond to entities in a bitstream that a user can access and manipulate. A VOP can be referred to as an object and represented by a bounding rectangle whose width and height may be the smallest multiples of 16 pixels (a macroblock size) surrounding each object so that the encoder may process the input video image on a VOP-by-VOP basis.

A VOP described in MPEG-4 includes shape information and color information consisting of luminance and chrominance data, wherein the shape information is represented by, e.g., a binary mask. In the binary mask, one binary value, e.g., 0, is used to designate a pixel, i.e., a background pixel located outside the object in the VOP and the other binary value, e.g., 255, is used to indicate a pixel, i.e., an object pixel inside the object.

A binary shape signal, representing the location and shape of an object in a frame or a VOP, can be expressed as a binary mask and can be divided into a plurality of binary alpha blocks (BAB's), wherein each BAB is represented by, e.g., a block of 16x16 binary pixels.

A BAB can be encoded by using a conventional bit-map-based shape coding method such as a context-based arithmetic encoding (CAE) method. Specifically, in an intra mode, a BAB in a current frame (or VOP) is encoded by using an intra CAE method to thereby generate an encoded BAB, wherein in the intra CAE method, a context value of a binary pixel of the BAB is obtained by using context values of binary pixels surrounding the binary pixel in the frame (or VOP).

And in an inter mode, a BAB in a current frame (or VOP) is encoded by using either the intra CAE method or an inter CAE method to thereby generate an encoded BAB, wherein in the inter CAE method, the context value of a binary pixel of the BAB is obtained by using the context values of binary pixels surrounding the binary pixel in the current frame (or VOP) and the context values of binary pixels within a previous frame (or VOP) (see MPEG-4 Video Verification Model Version 7.0, International Organization for Standardization, Coding of Moving and Associated Audio Information, ISO/IEC JTC1/SC29/WG11 MPEG97/N1642, Bristol, April 1997, pp 28-30).

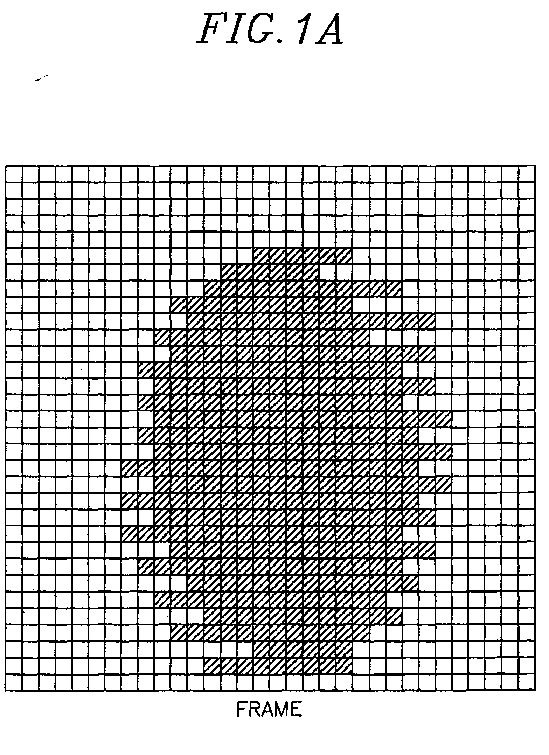

However, the conventional binary shape encoding methods described above are basically progressive coding methods which encode the binary shape signal on a frame-by-frame basis. Namely, in the conventional binary shape encoding methods, an interlaced coding technique employing a field-by-field based motion estimation method has not been used. Hence, even if a spatial and/or a temporal correlation of frames is lower than that of fields as shown in Figs. 1A to 1C, the interlaced coding technique has not been employed, thereby limiting the capability of enhancing the coding efficiency thereof.

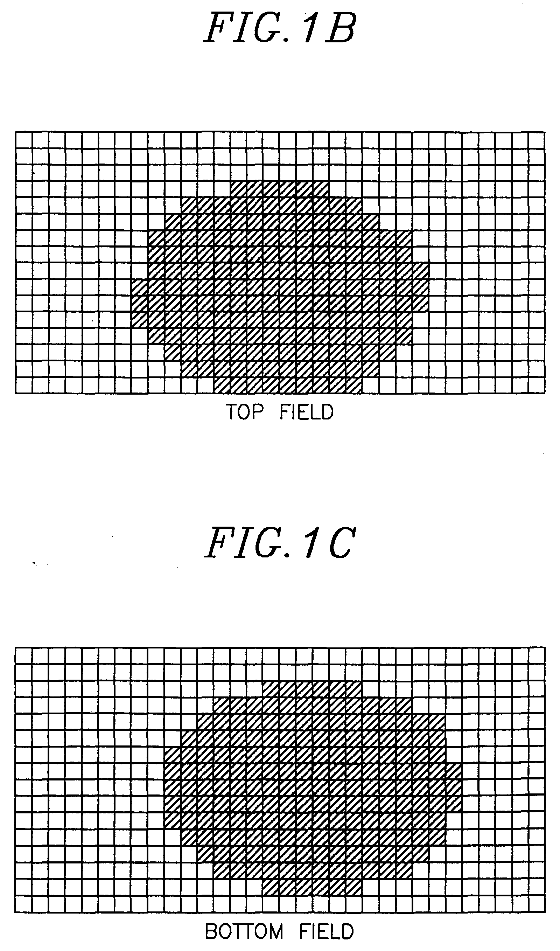

As an example of the above case, Fig. 1A depicts a frame; Fig. 1B, a top field; and Fig. 1C, a bottom field in a binary shape signal, wherein each of the squares within the fields and the frame is a pixel, a hatched square being a pixel in the object and a white one being a pixel in the background. The top and the bottom fields are made by rearranging each row of the frame: that is, the rows of the top field are determined by using the even-numbered rows of the frame having the 0th to the 15th rows therein and the rows of the bottom field are determined by using the odd-numbered rows of the frame, each field having 8 rows therein. As can be seen in the drawings, the object in the frame is more complex than the objects in the top and bottom fields. Accordingly, in case the above progressive shape coding technique is applied to encoding the binary shape signal, its coding efficiency may be reduced due to the use of a binary shape signal whose spatial correlation is lower.

To overcome the drawbacks, a binary shape encoding method employing the interlaced coding technique has been introduced as described in a commonly owned copending application, European Patent Application No. _____, filed on Dec. 2, 1997 and entitled "INTERLACED BINARY SHAPE CODING METHOD AND APPARATUS". The interlaced coding technique encodes the binary shape signal on a field-by-field basis by using a modified intra or inter CAE method capable of intra-encoding or inter-encoding a field.

Since, however, the spatial correlation of binary pixel values within each frame or each VOP is not constant, it is needed to determine a precise binary shape coding technique depending on the spatial correlation to thereby improve the coding efficiency thereof.

It is, therefore, a primary object of the present invention to provide a method and apparatus for adaptively coding a binary shape signal by using a progressive shape coding or an interlaced shape coding technique depending on the spatial correlation between the binary pixel values constituting the binary shape signal.

In accordance with one aspect of the present invention, there is provided a method for coding a binary block of MxN binary pixels within a binary shape signal including a multiplicity of binary blocks, M and N being positive integers, respectively, wherein each binary block is divided into M number of pixel lines and each binary pixel has a binary value K or 0 representing either an object pixel or a background pixel, each pixel line having 1xN binary pixels, comprising the steps of: (a) calculating a progressive correlation value based on the binary pixel values within the M number of pixel lines of the binary block; (b) computing a first interlaced correlation value by using the binary pixel values within M/2 number of pixel lines of a top field, each pixel line of the top field being located at the even-numbered rows of the binary block; (c) determining a second interlaced correlation value based on the binary pixel values within M/2 number of pixel lines of a bottom field, each pixel line of the bottom field being located at the odd-numbered rows of the binary block; (d) summing up the first and the second interlaced correlation values to thereby produce a summed interlaced correlation value; (e) comparing the progressive correlation value with the summed interlaced correlation value; and (f) encoding the binary block on a block-by-block basis by using a progressive shape coding technique or on a field-by-field basis by using an interlaced shape coding technique in response to the comparison result.

In accordance with another aspect of the present invention, there is provided an apparatus for coding a binary block of MxN binary pixels within a binary shape signal including a multiplicity of binary blocks, M and N being positive integers, respectively, wherein each binary block is divided into M number of pixel lines and each binary pixel has a binary value K or 0 representing either an object pixel or a background pixel, each pixel line having 1xN binary pixels, which comprises: a progressive calculation block for calculating a progressive correlation value based on the binary pixel values within the M number of pixel lines of the binary block; an interlaced calculating block for computing an interlaced correlation value by using the binary pixel values within M/2 number of pixel lines of a top field and binary pixel values within M/2 number of pixel lines of a bottom field, each pixel line of the top field being located at the even-numbered rows of the binary block and each pixel line of the bottom field being located at the odd-numbered rows of the binary block; a mode determination block for producing a mode selection signal by comparing the progressive correlation value with the interlaced correlation value; and a coding block for encoding the binary block on a block-by-block basis by using a progressive shape coding technique or on a field-by-field basis by using an interlaced shape coding technique in response to the mode selection signal.

The foregoing and other objects, features and advantages of the present invention will become apparent from the following detailed description of preferred embodiments of the invention with reference to the accompanying drawings, in which:

Figs. 1A, 1B, and 1C depict a frame, a top field, and a bottom field in a binary shape signal, respectively;
Fig. 2 represents a block diagram of an apparatus for adaptively encoding a binary shape signal in accordance with the present invention; and
Fig. 3 is a detailed block diagram of a mode selection unit 100 in Fig. 2.

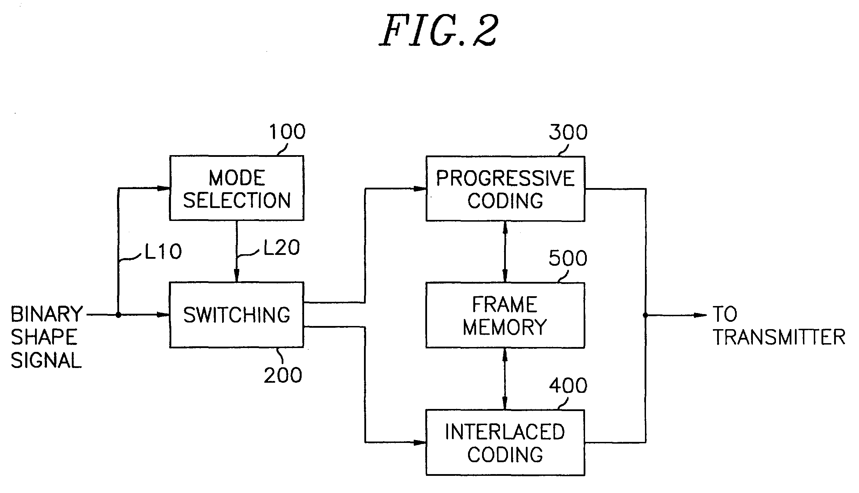

Referring to Fig. 2, there is provided a block diagram of an inventive apparatus for encoding a binary shape signal inputted thereto.

A binary shape signal, representing the location and shape of an object, is coupled to a switching unit 200 and a mode selection unit 100 via a line L10, wherein the binary shape signal is expressed in a form of a segmentation mask of MxN binary pixels, M and N being positive integers, respectively, each binary pixel having a binary value, e.g., 255 or 0 representing either an object pixel or a background pixel.

The mode selection unit 100 determines a precise coding mode between a progressive coding and an interlaced coding modes in order to effectively encode the binary shape signal by detecting the spatial correlation between binary pixel values within the binary shape signal.

In accordance with a preferred embodiment of the present invention, the mode selection unit 100 determines the precise coding mode by detecting whether binary pixel values within the segmentation mask satisfies a condition of a following equation EQ. 1 or not. That is, the spatial correlation of the binary pixel values can be recognized by EQ. 1.

$$\sum_{i=0}^{(M-4)/2} \sum_{j=0}^{N-1} (|P_{2i,j} - P_{2i+1,j}|/255 + |P_{2i+1,j} - P_{2i+2,j}|/255) + \alpha$$

$$\leq \sum_{i=0}^{(M-4)/2} \sum_{j=0}^{N-1} (|P_{2i,j} - P_{2i+2,j}|/255 + |P_{2i+1,j} - P_{2i+3,j}|/255) \quad EQ. \ 1$$

wherein $P_{2i,j}$ represents a binary pixel value at a coordinate (2i, j) in the segmentation mask; and a is a weight value.

Therefore, if the segmentation mask satisfies the condition of EQ. 1, the progressive coding mode is selected as the precise coding mode and, if otherwise, the interlaced coding mode is chosen.

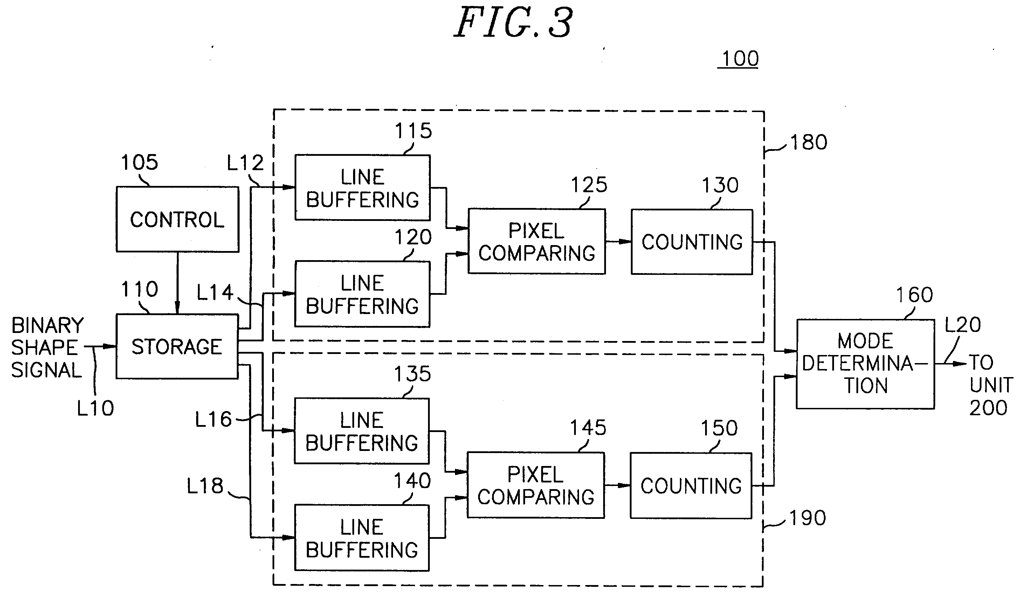

In Fig. 3, there is shown an exemplary block diagram of the mode selection unit 100 performing each process described in EQ. 1. The segmentation mask of MxN binary pixels coupled to the mode selection unit 100 is provided to a storage block 110 via the line L10.

The storage block 110 reserves the segmentation mask and selectively outputs, under the control of a control block 105, M number of pixel lines constituting the segmentation mask to a progressive calculation block 180 via lines L12 and L14, and an interlaced calculation block 190 through lines L16 and L18, wherein a pixel line consists of 1xN binary pixels.

For example, in order to detect the spatial correlation of binary pixels at the progressive calculation block 180, respective two adjacent pixel lines within the segmentation mask are coupled onto the lines L12 and L14, respectively. For example, if a 0th and a first pixel lines of the segmentation mask are provided at first, subsequently, the first and a second pixel lines are supplied to the lines L12 and L14, respectively. In the same way, all of the M number of pixel lines in the segmentation mask are sequentially transferred to the progressive calculation block 180.

On the other hand, in order to detect the spatial correlation of binary pixels at the interlaced calculation block 190, the pixel lines within the segmentation mask are first separated into two fields, i.e., a top field and a bottom field, wherein the top and the bottom fields contain M/2 number of pixel lines, respectively, the pixel lines of the top field being located at the even-numbered rows of the segmentation mask and the pixel lines of the bottom field being located at the odd-numbered rows of the segmentation mask. Then, respective two adjacent pixel lines within each of the fields are sequentially provided onto the lines L16 and L18, respectively. For example, at first, a 0th and a second pixel lines within the segmentation mask are provided to the lines L16 and L18, respectively, and, subsequently, a first and a third pixel lines within the segmentation mask are supplied onto the lines. Next, remaining pixel lines are transferred to the interlaced calculation block 190 in order of the second and a fourth pixel lines, the third and a fifth pixel lines, and the fourth and a sixth pixel lines, and the like. Accordingly, in the above example, the pixel lines within the top and the bottom fields are processed in turns. The processing order of respective corresponding two pixel lines can be changed in accordance with another embodiment of the present invention. In other words, the top field is processed prior to the bottom field and vice versa. Therefore, the pixel lines within the segmentation mask are processed in order of the 0th and the second pixel lines, the second and the fourth pixel lines, ..., the first and the third pixel lines, the third and the fifth pixel lines, and the like.

Once the respective two pixel lines are transferred from the storage block 110, the progressive and the interlaced calculation blocks 180 and 190 proceed to a next process based on the pixel lines coupled thereto.

As shown in Fig. 3, the progressive calculation block 180 and the interlaced calculation block 190 contain same circuits, i.e., two line buffering blocks, a pixel comparing block, and a counting block, and the operation of corresponding circuits are also identical to each other.

In the progressive calculation block 180, the pixel lines on the lines L12 and L14 are inputted to a first and a second line buffering blocks 115 and 120, respectively. The first and the second line buffering blocks 115 and 120 store the inputted pixel lines and provide corresponding binary pixel values on a same column of the two pixel lines to a first pixel comparing block 125 on a pixel-by-pixel basis.

The first pixel comparing block 125 compares the binary pixel value from the first line buffering block 115 with that from the second line buffering block 120. As a result of the above comparison, if the compared two binary pixel values are determined to be identical, a comparison value having a digit "1" is produced and delivered to a first counting block 130 and, if otherwise, a comparison value having a digit "0" is provided to the first counting block 130.

The first counting block 130 sums up all of the comparison values derived from the first pixel comparing block 125 and provides the sum as a progressive sum to a mode determination block 160.

Meanwhile, in the interlaced calculation block 190, the pixel lines on the lines L16 and L18 are provided to a third and a fourth line buffering blocks 135 and 140, respectively. Similar to in the progressive calculation block 180, the third and the fourth line buffering blocks 135 and 140 reserve the provided pixel lines and output corresponding binary pixel values on a same column of the two pixel lines to a second pixel comparing block 145 on a pixel-by-pixel basis.

The second pixel comparing block 145 also compares the binary pixel value from the third line buffering block 135 with that from the fourth line buffering block 140. According to the binary pixel value comparison, if the corresponding two binary pixel values are determined to be identical, a comparison value of a digit "1" is outputted to a second counting block 150 and, if otherwise, a comparison value of a digit "0" is coupled to the second counting block 150.

The second counting block 150 also sums up all of the comparison values sequentially delivered from the second pixel comparing block 145 and provides the sum as an interlaced sum to the mode determination block 160.

The mode determination block 160 compares the progressive sum from the first counting block 130 in the progressive calculation block 180 with the interlaced sum from the second counting block 150 in the interlaced calculation block 190 to thereby produce a mode selection signal to the switching unit 200 through a line L20.

As described in the prior art, in the progressive shape coding mode, the shape encoding process is performed by using a whole segmentation mask. On the other hand, in the interlaced shape coding mode, the shape encoding process is achieved by using two fields obtained from rearranging the pixel lines within the segmentation mask. Therefore, in order to encode the two fields and transmit encoded data thereof, there needs general information representing, e.g., header information or a motion vector, for each of the two fields. Hence, larger bits should be assigned to the transmission of the encoded data of the two fields compared with the transmission of encoded data of the whole segmentation mask.

Accordingly, in the above comparison process at the mode determination block 160, the weight value a compensating the additional bits assigned to the interlaced shape coding mode is added to the progressive sum. That is, as shown in EQ. 1, at the mode determination block 160, the interlaced sum is compared with the addition value of the progressive sum and the weight value $\alpha$. As the comparison result, if the interlaced sum is greater than or equal to the addition value, the mode selection signal having a logic high is provided to the switching unit 200 via the line L20 in order to select the progressive shape coding mode and, if otherwise, the mode selection signal having a logic low is supplied to choose the interlaced shape coding mode.

Referring back to Fig. 2, the switching unit 200 passes the binary shape signal coupled thereto to either a progressive coding unit 300 or an interlaced coding unit 400 in response to the mode selection signal derived from the mode selection unit 100. That is, if the mode selection signal of a logic high is fed to the switching unit 200, the binary shape signal is transferred to the progressive coding unit 300 and, if the mode selection signal of a logic low is coupled, the binary shape signal is inputted to the interlaced coding unit 400.

Once the binary shape signal is provided thereto, the progressive coding unit 300 or the interlaced coding unit 400 encodes the binary shape signal based on a previous binary shape signal retrieved from a frame memory 500 by using a known bit-map-based shape coding method such as a context-based arithmetic encoding (CAE) method, to thereby produce encoded data to a transmitter (not shown) for the transmission thereof.

In another preferred embodiment of the present invention, the mode selection process can be performed on a BAB-by-BAB basis.

As illustrated above, by using the present invention, the binary shape signal can be effectively encoded according to the spatial correlation between the binary pixel values constituting the binary shape signal.

While the present invention has been described with respect to the particular embodiments, it will be apparent to those skilled in the art that various changes and modifications may be made without departing from the scope of the invention as defined in the following claims.

## Claims

1. A method for coding a binary block of MxN binary pixels within a binary shape signal including a multiplicity of binary blocks, M and N being positive integers, respectively, wherein each binary block is divided into M number of pixel lines and each binary pixel has a binary value K or 0 representing either an object pixel or a background pixel, each pixel line having 1xN binary pixels, comprising the steps of:

(a) calculating a progressive correlation value based on the binary pixel values within the M number of pixel lines of the binary block;
(b) computing a first interlaced correlation value by using the binary pixel values within M/2 number of pixel lines of a top field, each pixel line of the top field being located at the even-numbered rows of the binary block;
(c) determining a second interlaced correlation value based on the binary pixel values within M/2 number of pixel lines of a bottom field, each pixel line of the bottom field being located at the odd-numbered rows of the binary block;
(d) summing up the first and the second interlaced correlation values to thereby produce a summed interlaced correlation value;
(e) comparing the progressive correlation value with the summed interlaced correlation value; and
(f) encoding the binary block on a block-by-block basis by using a progressive shape coding technique or on a field-by-field basis by using an interlaced shape coding technique in response to the comparison result.

2. The method according to claim 1, wherein the summed interlaced correlation value is calculated as:

$$\sum_{i=0}^{(M-4)/2} \sum_{j=0}^{N-1} (|P_{2i,j} - P_{2i+2,j}|/K + |P_{2i+1,j} - P_{2i+3,j}|/K)$$

wherein $P_{2i,j}$ represents a binary pixel value at a coordinate (2i, j) in the binary block; and K is the binary value representing the object pixel as defined in claim 1.

3. The method according to claim 2, wherein the progressive correlation value is determined as:

$$\sum_{i=0}^{(M-4)/2} \sum_{j=0}^{N-1} (|P_{2i,j} - P_{2i+1,j}|/K + |P_{2i+1,j} - P_{2i+2,j}|/K).$$

4. The method according to claim 3, wherein the step (f) includes the steps of:

(f1) encoding the binary block on the block-by-block basis by using the progressive shape coding technique if the summed interlaced correlation value is greater than or equal to the progressive correlation value; and
(f2) encoding the binary block on the field-by-field basis by using the interlaced shape coding technique if the summed interlaced correlation value is smaller than the progressive correlation value.

5. The method according to claim 4, wherein the progressive and the interlaced shape coding techniques employ an intra context-based arithmetic encoding (CAE) method and/or an inter CAE method.

6. An apparatus for coding a binary block of MxN binary pixels within a binary shape signal including a multiplicity of binary blocks, M and N being positive integers, respectively, wherein each binary block is divided into M number of pixel lines and each binary pixel has a binary value K or 0 representing either an object pixel or a background pixel, each pixel line having 1xN binary pixels, which comprises:

means for calculating a progressive correlation value based on the binary pixel values within the M number of pixel lines of the binary block;
means for computing an interlaced correlation value by using the binary pixel values within M/2 number of pixel lines of a top field and the binary pixel values within M/2 number of pixel lines of a bottom field, each pixel line of the top field being located at the even-numbered rows of the binary block and each pixel line of the bottom field being located at the odd-numbered rows of the binary block;
means for producing a mode selection signal by comparing the progressive correlation value with the interlaced correlation value; and
means for encoding the binary block on a block-by-block basis by using a progressive shape coding technique or on a field-by-field basis by using an interlaced shape coding technique in response to the mode selection signal.

7. The apparatus as recited in claim 6, wherein the progressive correlation value calculating means includes:

means for detecting M-1 number of pairs of adjacent pixel lines among the M number of pixel lines of the binary block;
means for comparing, for each pair of adjacent pixel lines, a binary pixel value at each column on a pixel line with that at each corresponding column on the other pixel line of said each pair to thereby provide a comparison value; and
means for summing up comparison values for the binary block and outputting the sum as the progressive correlation value.

8. The apparatus as recited in claim 7, wherein the interlaced correlation value computing means includes:

means for calculating a top correlation value by comparing corresponding binary pixel values at each column within (M/2)-1 number of pairs of adjacent pixel lines among the M/2 number of pixel lines of the top field;

means for ciphering a bottom correlation value by comparing corresponding binary pixel values at each column within (M/2)-1 number of pairs of adjacent pixel lines among the M/2 number of pixel lines of the bottom field; and

means for summing up the top and the bottom correlation values and outputting the sum as the interlaced correlation value.

9. The apparatus as recited in claim 8, wherein the top correlation value calculating means includes:

means for detecting (M/2)-1 number of pairs of adjacent pixel lines among the M/2 number of pixel lines of the top field;

means for comparing, for each pair of adjacent pixel lines, a binary pixel value at each column on a pixel line with that at each corresponding column on the other pixel line of said each pair to thereby provide a comparison value; and

means for summing up comparison values for the top field and outputting the sum as the top correlation value.

10. The apparatus as recited in claim 9, wherein the bottom correlation value ciphering means includes:

means for detecting (M/2)-1 number of pairs of adjacent pixel lines among the M/2 number of pixel lines of the bottom field;

means for comparing, for each pair of adjacent pixel lines, a binary pixel value at each column on a pixel line with that at each corresponding column on the other pixel line of said each pair to thereby provide a comparison value; and

means for summing up comparison values for the bottom field and outputting the sum as the bottom correlation value.

11. The apparatus as recited in claim 7, 9, or 10, wherein the comparing means produces the comparison value having a digit 1 if the corresponding binary pixel values are identical to each other and generates the comparison value having a digit 0 if otherwise.

12. The apparatus as recited in claim 11, wherein the mode selection signal producing means generates the mode selection signal having a logic high if the interlaced correlation value is greater than or equal to the progressive correlation value, and produces the mode selection signal having a logic low if otherwise.

13. The apparatus as recited in claim 12, wherein the encoding means includes:

means for encoding the binary block on the block-by-block basis by using the progressive shape coding technique in response to the mode selection signal having a logic high; and

means for encoding the binary block on the field-by-field basis by using the interlaced shape coding technique in response to the mode selection signal having a logic low.

14. The apparatus as recited in claim 13, wherein the progressive and the interlaced shape coding techniques employ an intra context-based arithmetic encoding (CAE) method and/or an inter CAE method.

15. The apparatus as recited in claim 14, wherein the binary block is a binary alpha block of 16x16 binary pixels.

# FIG. 1A

FRAME

# FIG. 1B

TOP FIELD

# FIG. 1C

BOTTOM FIELD

# FIG.2

## FIG.3

*FIG.3*

EP 0 923 250 A1

European Patent
Office

**EUROPEAN SEARCH REPORT**

Application Number

EP 97 12 1268

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 90 15506 A (SIEMENS AG) 13 December 1990 | 1-4,6-13 | H04N7/26 |
| Y | * abstract *<br>* column 2, line 37 - column 4, line 4 *<br>* column 8, line 9 - column 9, line 5 *<br>* figures 2-7 * | 5,14,15 | |
| Y | N. BRADY, F. BOSSEN, N. MURPHY: "Context-based arithmetic encoding of 2D shape"<br>PROCEEDINGS OF THE INTERNATIONAL CONFERENCE ON IMAGE PROCESSING,<br>26 - 29 October 1997, SANTA BARBARA, CA,<br>pages 29-32, XP002065174<br>* paragraph 2 *<br>* paragraph 3 * | 5,14,15 | |
| A | * figures 1,2 * | 1-4,6-13 | |
| A | EP 0 618 731 A (SONY CORP) 5 October 1994<br>* abstract *<br>* column 12, line 25 - column 13, line 10 *<br>* claims 7-12 * | 1-15 | TECHNICAL FIELDS SEARCHED (Int.Cl.6)<br><br>H04N |
| A | OSTERMANN J: "METHODOLOGIES USED FOR EVALUATION OF VIDEO TOOLS AND ALGORITHMS IN MPEG-4"<br>SIGNAL PROCESSING. IMAGE COMMUNICATION,<br>vol. 9, no. 4, May 1997,<br>pages 343-365, XP000700945<br>* paragraph 5.1.1.1 * | 1-15 | |

-/--

The present search report has been drawn up for all claims

| Place of search | Date of completion of the search | Examiner |
|---|---|---|
| THE HAGUE | 20 May 1998 | Berbain, F |

EP 0 923 250 A1

European Patent Office

**EUROPEAN SEARCH REPORT**

Application Number

EP 97 12 1268

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | SIKORA T: "ENTWICKLUNG EINES MPEG-4 VIDEO-STANDARDS: DAS MPEG-4 VIDEO-VERIFIKATIONSMODELL" FERNSEH UND KINOTECHNIK, vol. 50, no. 8/09, August 1996, pages 439/440, 442-444, 446 - 448, XP000636465 * paragraph 4.3 * * figures 1,2,5 * | 1-15 | |

TECHNICAL FIELDS SEARCHED (Int.Cl.6)

The present search report has been drawn up for all claims

| Place of search | Date of completion of the search | Examiner |
|---|---|---|
| THE HAGUE | 20 May 1998 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

13